# EUROPEAN PATENT APPLICATION

(11) **EP 2 638 823 A1**
(43) Date of publication of application: **18.09.2013**
(21) Application number: 13158988.9
(22) Date of filing: 13.03.2013
(51) Int. Cl.: A47B 23/04, F16M 11/10, F16M 13/02

(54) **Stand for a tablet computer**

(30) Priority: 13.03.2012 GB 201204402
(71) Applicant: Andrews, John George, Anglesey LL63 5EQ (GB)
(72) Inventor: Andrews, John George, Anglesey LL63 5EQ (GB)
(74) Representative: Hamilton, Alistair

(57) **Abstract**

A stand for a tablet computer is disclosed. The stand comprises a base (10) that can be supported upon a support surface, a support (28) connected by a pivot to the base that can be folded between a compact position in which it closely overlies the base, and at least one raised position in which a part of the support remote from the pivot is retained above the base. The stand further includes a rest (12) that can be placed in an operative position spaced from the support; whereby an edge portion of a tablet computer (60) can be placed between an edge portion of the rest and the support for use. The rest is connected to the support by an intermediate component (48) that allows it to be displaced to the operative position for use. The rest is substantially parallel to the support or is closer to the support in the region of the stops than it is at the edge portion.

## Description

This invention relates to an apparatus and a method for using a "tablet computer". In the context of this specification, a tablet computer is a computing device that is used primarily by interaction with a touch screen that covers a large part of a generally flat computing device. While a tablet computer will generally not have a physical keyboard connected to it, some tablet computers have a keyboard that can be deployed or connected to allow it to be used as a notebook computer. Moreover, the term "tablet computer" is not intended to be limited to any particular configuration, operating system, processor or architecture.

At the present time, tablet computers are increasing in both popularity and computing power. The latter of these means that users of such computers wish to use them to perform an ever-increasing range of functions. It is well-known to provide an external keyboard that can be connected to a tablet computer to enable it to be used like a laptop computer, this negates some of the most attractive features of a tablet computer: that it is small, light and self-contained.

A tablet computer will typically have a virtual keyboard - that is, a representation of a keyboard presented to a user on the display of the tablet computer, with each "key" being activated by a user tapping a specific area of the display in which a key symbol is displayed. However, the inherent nature of a tablet computer makes a virtual keyboard difficult to use, in that it requires a user to place his or her wrists at an awkward angle to reach the keys.

GB-A-2 304 642, US-A-2010/0 213 330 and US-A-5 341 929 disclose stands that can support a laptop computer in use. However, they do not provide an optimal support for a tablet computer.

An aim of this invention is to provide for easier and more effective access to a virtual keyboard and touch screen to enable a user to use it more effectively. Its further aim is to raise the screen to a more comfortable viewing height, thereby reducing the need for a user to adopt a crouched posture.

To this end, the invention provides a stand for a tablet computer as set forth in claim 1.

Such a stand can position a tablet in a convenient position for use with a user's wrists supported on the rest and in a more neutral position. In this position, the user's fingers are correctly placed for operation of a virtual keyboard, and the screen is raised to a position in which it is presented towards a user. The tablet computer can be supported in this way in either landscape or portrait orientation.

The stand may be configured such that tablet computer makes direct contact with the rest when it is in use. Alternatively, there may be an intermediate component between the rest and the tablet computer.

Typically, the rest is connected to the support by an intermediate component that allows it to be displaced to the operative position for use. Alternatively, the rest may be capable of being deflected to the operative position, for example, by flexing, stretching or bending it.

The or each stop arrangement is preferably configured such that when the tablet computer is against the stop arrangement or stop arrangements, its display is not obscured by the rest. Preferably, the base is larger than the rest.

The rest is typically substantially parallel to the support. Alternatively, it may be slightly closer to the support remote from its edge portion than it is at the edge portion - that is to say, the space between the rest and the support may be tapered, so creating a tapering space into which the edge of a tablet computer can be inserted. Such a taper can limit the distance that a tablet computer can extend into the space between the rest and the support, so constituting a stop arrangement.

The base may include one or more upstanding projections, disposed such that a tablet computer can be placed upon the base, surrounded by the projections. The or each projection may be in the form of a flange and may be at the periphery of the base. In such embodiments, the support may be pivotally connected to one of the projections, such that when it is folded to overlie the base, it is spaced from the base by a distance sufficient to contain a tablet computer.

In preferred embodiments of the invention, the support can be retained in one of a plurality of sloping dispositions above the base. This allows a user to select from a variety of position at which a tablet computer is to be supported. A plurality of spaced stop arrangements may be provided to allow a tablet computer to be supported in different alternative configurations, such as a raised configuration suitable for use as a presentation display or with an external keyboard.

Typical embodiments of the invention are formed from one or more sheets of metal/polymer composite sandwich sheet material. Other embodiments of the invention are formed of plastic material, or of fabric with rigid regions. Surfaces that make contact with a tablet computer when it is being used or stored are preferably covered by a comparatively soft material, such as foamed plastic.

Embodiments of the invention will now be described in detail, by way of example, and with reference to the accompanying drawings, in which:
Figures 1 and 2 are front and rear views of a first panel being a component of a first embodiment of the invention;

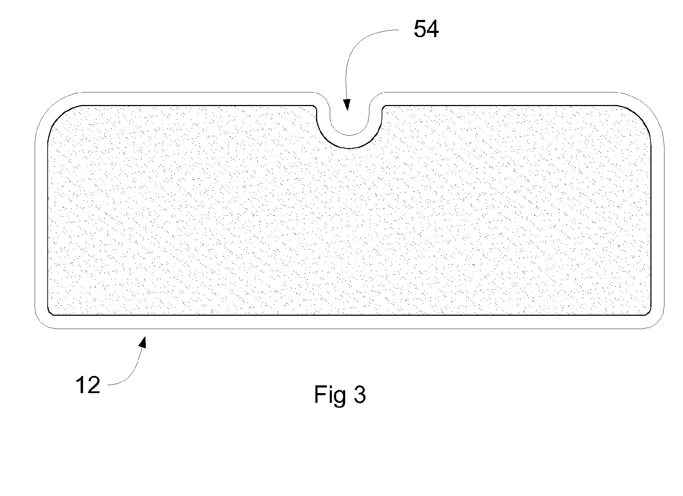

Figure 3 is a view of a front surface of a second panel being a component of a first embodiment of the invention;

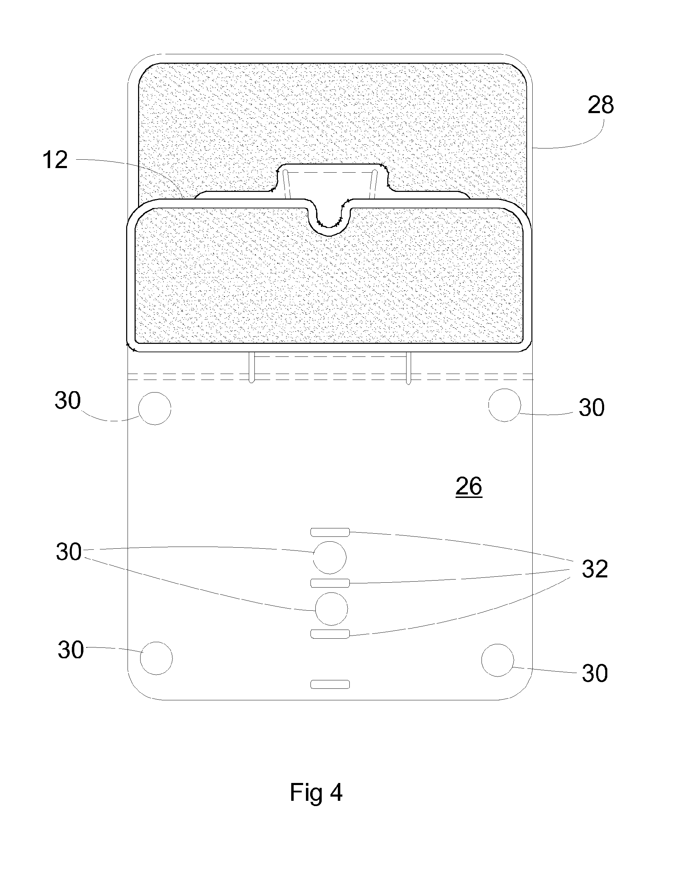

Figure 4 is a view of the assembled first embodiment of the invention in an opened-out configuration;
Figure 5 is a view of the assembled first embodiment of the invention in a folded configuration;
Figure 6 shows the first embodiment of the invention holding a tablet computer for use;

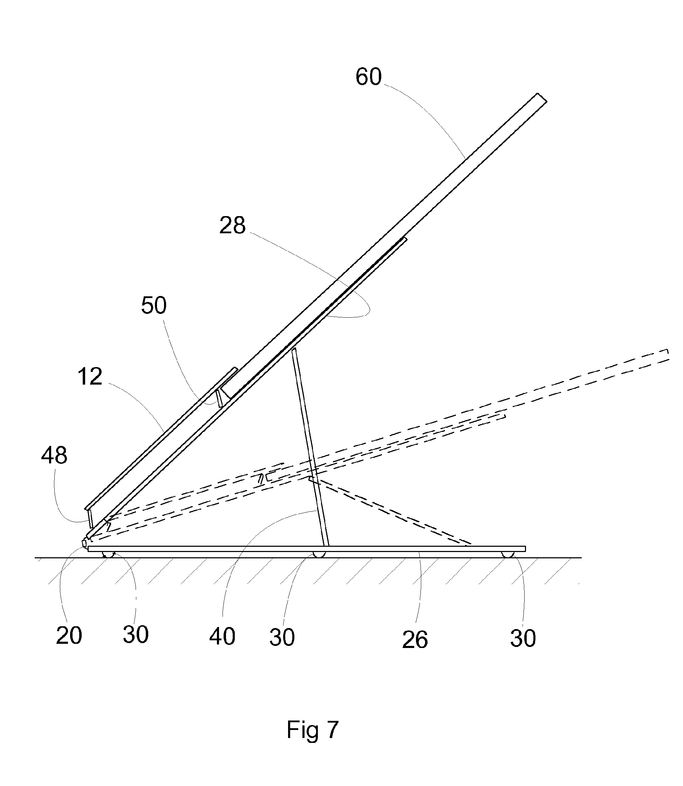

Figure 7 is a side view of the first embodiment of the invention holding a tablet computer for use in two alternative configurations;
Figure 8 is a front view of a first panel being a component of a second embodiment of the invention;
Figure 9 is a side view of the embodiment of Figure 8;

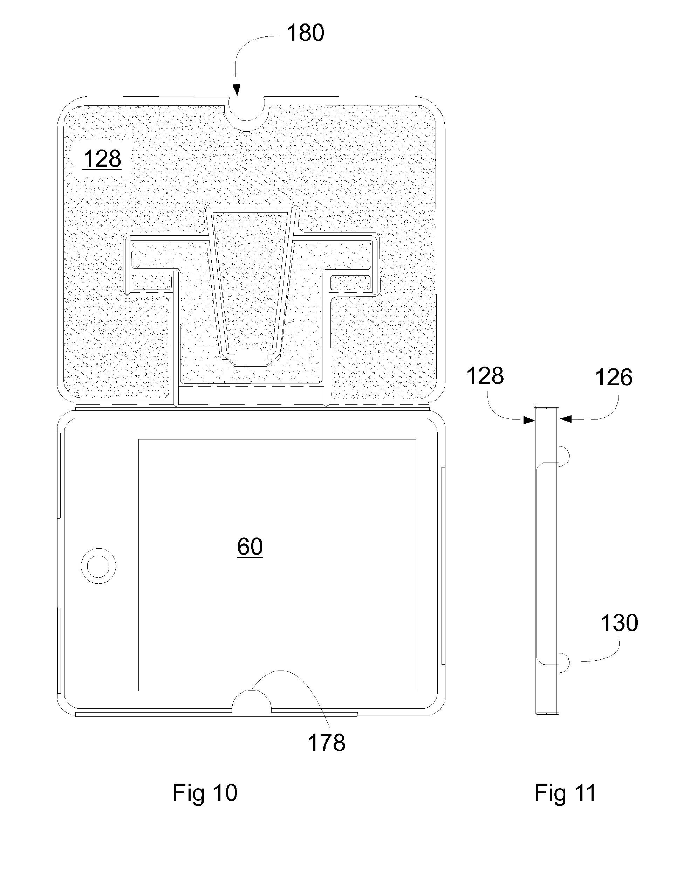

Figure 10 shows the second embodiment with a tablet computer stored within it;
Figure 11 is a side view corresponding to that of Figure 10;
Figure 12 shows an alternative use of an embodiment of the invention;
Figure 13 shows a third embodiment of the invention in a flat folded configuration;
Figures 14, 15 and 16 are a base, a brace and a support component of the embodiment of Figure 13;
Figure 17 shows the embodiment of Figure 13 in a folded storage condition;
Figure 18 to 21 show steps of transforming the embodiment of Figure 13 from the folded storage condition to a first operative condition;
Figure 22 shows the embodiment of Figure 13 in use in the first operative condition;
Figure 23 shows the embodiment of Figure 13 in use in a second operative condition;
Figure 24 shows the embodiment of Figure 13 in use in the second operative condition; and
Figure 25 shows the embodiment of Figure 13 in the second operative condition in a second mode of use.

In these embodiments, the items described as "panels" are formed as three-layer composite structures, comprising two thin outer layers of aluminium sheet bonded to an intermediate layer of tough, flexible plastic material. These can be formed by milling. Where required, a rectilinear strip about 1 mm in width can be removed by milling from each aluminium sheet on opposite sides of the intermediate layer, thereby completely removing the metal, leaving only the flexible intermediate layer. This forms a fold line about which the panel can be folded by user. Each part of a panel that can be folded with respect to another will be called a "region".

The composite structure described above is particularly suitable for relatively small-scale production. Alternatively, the panels may be formed from a flat plastic sheet, with fold lines being formed by thin lines within the material or within interconnecting moulding sections. Many other constrictions could be used to form the panels. In the interest of clarity, in the drawings, edges of a panel are shown in solid lines while each fold line is shown as a *single* broken line.

Parts of the surfaces of the panels are covered with a dense foam adhered to one of the aluminium outer layers. These regions serve to provide a support surface that will not scratch an item placed on it, and which provide a relatively high frictional surface to resist motion of such an item across the panel. In the drawings, these are shown as stippled regions. Foam is also placed on parts of the surface with which a user makes contact during use of the stand to improve the user's comfort.

With reference to the drawings, a first embodiment of the invention is intended to provide a support for a tablet computer during its use. This embodiment comprises two panels a first panel 10 that will be called the main panel and a second panel 12 that will be called the rest.

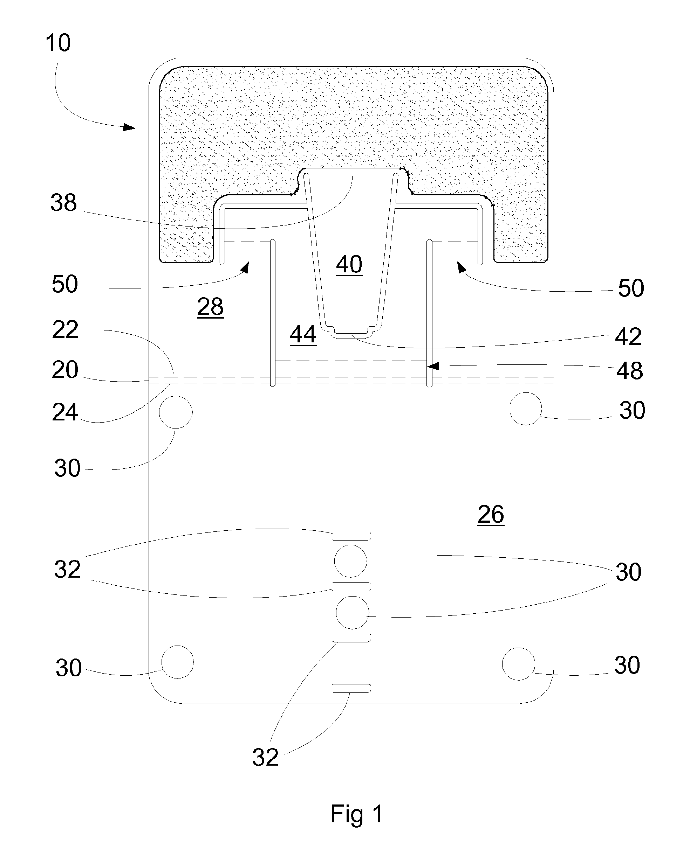

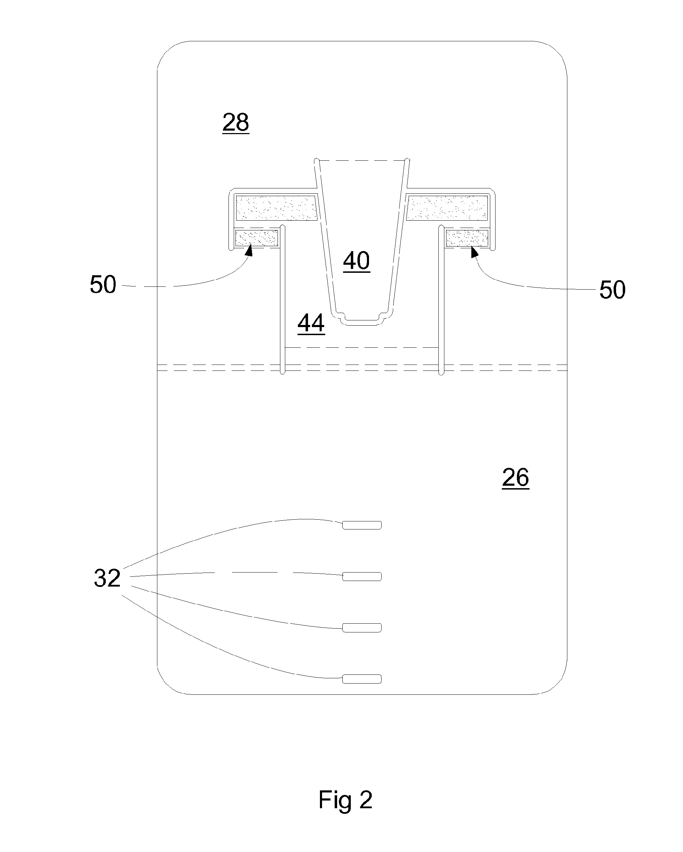

The main panel 10 is shown in Figures 1 and 2. It is shaped as a rectangle with rounded corners, having a long axis of symmetry that is of length somewhat less than twice that of a short axis of symmetry.

A narrow spacing region 20 extends along the short axis of symmetry between first and second fold lines 22, 24. The spacing region 20 is approximately 1 mm in length along the long axis. (Alternatively, a single hinge line might be used.) To one side of the main panel is a base region 26 and to the other side is a support region 28. Each of the base region 26 and the support region 28 are rectangles, having two rounded corners remote from the spacing region 20 and two square corners adjacent to the spacing region 20.

The base region 26 has several support feet 30, one adjacent to each corner and more along the long axis of the main panel 10. Several slots 32 are formed through the base region 26. Each slot extends for approximately 22 mm in length and 5 mm in width, the length extending normally to and symmetrically about the long axis of the main panel 10.

A third fold line 38 extends parallel to the short axis of the main panel 10. The third fold line extends symmetrically about the long axis of the main panel 10 approximately one quarter of the way to the long edges of the main panel 10. A prop region 40 extends from the third fold line 38 part way towards the spacing region 20 symmetrically about the long axis of the main panel 10. The prop region 40 tapers away from the third fold line 38 where it ends in a transverse edge from which a tongue 42 projects.

A displaceable region 44 surrounds the tongue 42. The displaceable region 44 is connected to the spacing region 20 by a first connection region 48, and to the support region 28 by second and third connection regions 50. Each of the connection regions 48, 50 have the same dimension parallel to the long axis of the main panel 10.

Part of the front of the support region 28 remote from the spacing region 20, surrounding part of the displaceable region 44 is covered by foam, as described above. The rear surfaces of the second and third connection regions 50 and part of the rear surface of the displaceable region 44 are also covered by foam.

The rest 12 has a peripheral shape that is generally a rounded rectangle. In this embodiment, upper corners of the rectangle have a radius that is greater than that of the lower corners. An upper edge interconnects the upper corners, there being a notch 54 extending into the rest from the upper edge. The longer dimension of the rest (which will be called the width) is substantially equal to the dimension of the main panel 10 along its short axis.

All but for a small, peripheral border region, the front surface of the rest 12 is covered by foam on the outside face only. However may have foam on the inside if contact is to be made with the tablet.

The stand is assembled in manufacture by fixing a rear surface of the rest to the front surface of the displaceable region 44 of the main panel 10, such that the width of the rest is parallel with the short axis of the main panel 10, and such that the rest does not substantially project beyond either long edge of the main panel 10. In this embodiment, fixing is achieved by bonding. Further alternative embodiments may have the rest integrally formed with a displaceable region.

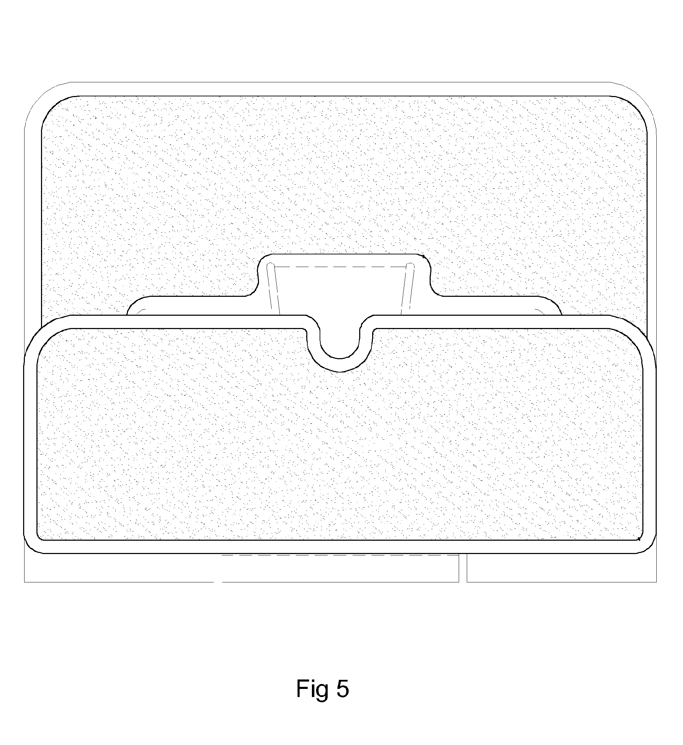

When the stand is not being used, it can be folded to a configuration shown in Figure 5. In this configuration, the main panel 10 is folded such that rear surfaces of the base region 26 and the support region 28 are in contact with one another. The spacing region 20 accommodates the thickness of the regions 26, 28, allowing them to lie flat. This could also be achieved with a single hinge.

For normal use, the stand is placed on a support surface with the base region 26 facing towards the support surface so that it is supported on its support feet 30. The support region 28 is then lifted up, pivoting around the spacing region 20 to a desired height. The prop region 40 is then pushed downwards, and the tongue 42 is guided into one of the slots 32. This maintains the support region 28 in its raised position. The angle at which the support region 28 extends above the base region 26 is chosen be selecting which one of the slots 32 is chosen by the user in this step. Many alternative arrangements for locating the prop may be provided in alternative embodiments, such as placing hook-and-eye fastening material on the prop region 40 and the base region 26.

The rest 12 is then pulled away from the support region 28. This is possible because the connection regions 48, 50 pivot with respect to the support region 28 and the displaceable region 44. Because all of the connection regions 48, 50 are substantially the same length, the displaceable region 44, and the rest attached to it, remain substantially parallel to the support region 28.

An edge of a tablet computer 60 is then inserted between the rest 12 and the support region 28 until its further movement is prevented when it makes contact with the second and third connection regions 50 (which are, at this stage, upstanding from the support region 28). In this configuration the connection regions 50 serve as stops to limit the maximum distance that the edge region of the computer can pass between the rest 12 and the support region 28. (In configurations in which the space between the rest 12 and the support region 28 is tapered, the taper may limit the maximum distance that the edge region of the computer can pass between the rest 12 and the support region 28.) The lengths of the connection regions 48, 50 are selected such that the maximum distance between the support region 28 and the displaceable region 44 such that a tablet computer with which the stand is intended for use is a close, but not tight, sliding fit. It will be noted that every surface that makes direct contact with the tablet computer 60 is covered with foam to prevent damage to the tablet computer 60, although this is not strictly necessary for the stand to work.

The distance between the upper edge 62 of the displaceable region 44 and the stops formed by the second and third connection regions 50 determines how far the tablet computer 60 can slide under the rest 12. This distance (which is the length of a part of the rest that overlaps the tablet computer 60) is normally small as compared with the total length of the rest 12or the tablet computer may be positioned such that there is no overlap. The overlapping region, along with the remaining part of the rest serves as a support for a user's wrists or palms. This distance is selected to provide for sufficiently secure retention of the tablet computer while ensuring that the operative part of the display of the tablet computer 60 remains unobstructed by the rest 12. In cases where the tablet computer 60 has a hardware button 64 on its front surface, the notch 54 allows access to it. Access to ports and switches on the edges of the tablet computer can be accessed while the tablet computer in place on the stand.

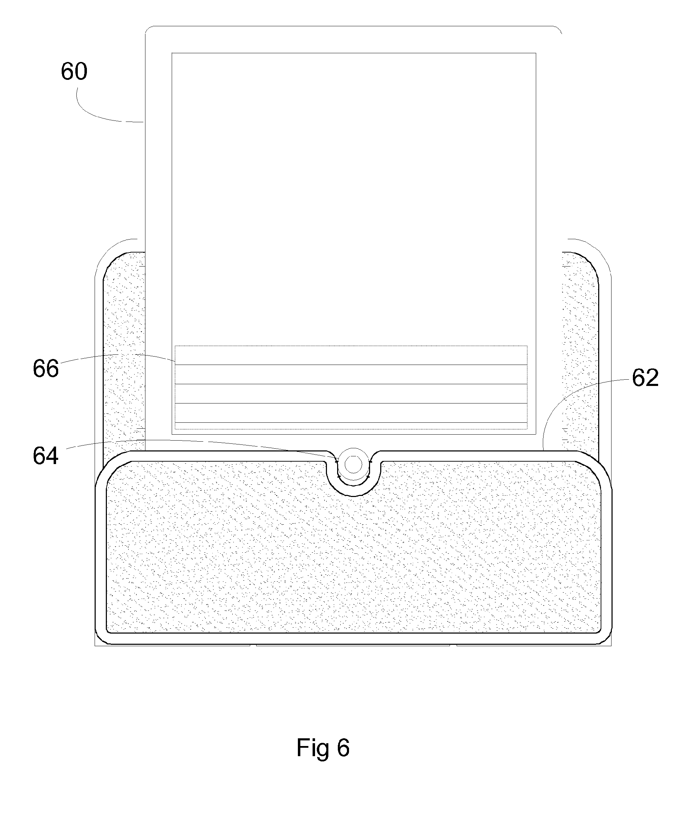

When the tablet computer 60 is performing a task that allows a user to enter text, a virtual keyboard 66 is displayed in a lower region of the screen. A user can conveniently use this by placing his or her wrists on the rest 12, which will result in the keyboard being optimally positioned under the user's fingertips. The pressure of the user's wrists on the rest 12 pushes it against the front surface of the tablet computer 60 which acts to steady it. The foam covering of the rest 12 acts as a cushion for the user's wrists. Irrespective of the angle at which the support region 28 is disposed (as determined by which one of the slots is used to receive the tongue 42 of the prop region 40), the rest is always substantially parallel to the front surface of the tablet computer 60, so maintaining an optimal relation between the user's wrists and the virtual keyboard 66. Note also that the tablet computer 60 can be used in portrait mode, as shown in Figure 6, or rotated by 90° for use in landscape mode.

In an optional variation, the first connection region is slightly shorter in the direction of the long axis of the main panel 10 than the other two connection regions 50, such that the space into which the tablet computer 60 is inserted is slightly tapered. This can help to steady the tablet computer 60, especially those that taper peripherally.

The second embodiment of the invention can be considered to be a modification of the first embodiment. Corresponding components will be given the same number as used in the description of the first embodiment with the addition of 100.

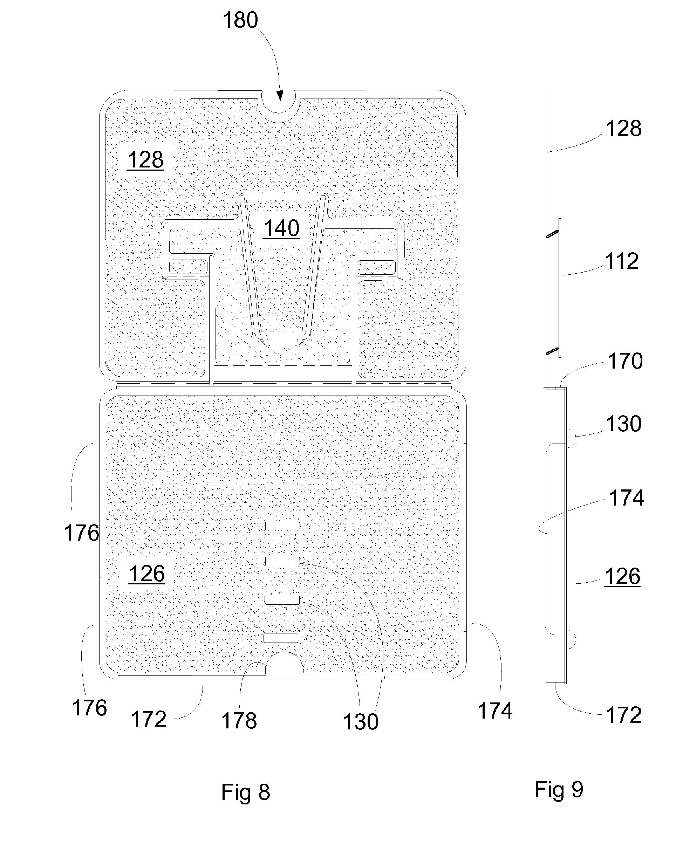

With reference to Figures 8 and 9, the base region 126 in this embodiment has four flange regions that are upstanding from each of its four edges. Each flange extends for part of the length of the corresponding edge, and may be discontinuous to allow access to operative components on the periphery of a table computer. The support region 128 is connected to a first flange region 170, a second flange region 172 extends from the opposite long edge. Third and fourth flange regions 174, 176 extend from the short edges of the base region 126.

The second flange region has a central projecting tab 178 that extends over and parallel to the base region 126. A corresponding notch 180 is formed in the support region 128 in its edge remote from the base region. The tab 178 ensures that the tablet computer 60 cannot be removed until the cover 128 is fully open. This stops the tablet computer 60 from falling out if the lid 128 is just partially open.

The upper surface of the main panel 110 has substantially the same coverage of foam as that of the first embodiment, while the lower surface is almost entirely covered by foam.

A tablet computer 60 can be supported for use on the support region 128, raised on the prop region 140, under the rest 112, in much the same manner as in the first embodiment. When it is not in use, the tablet computer 60 can be placed on the base region 126 where it is surrounded by the flanges 170, 172, 174, 176 with the tab 178 overlapping an edge of the tablet computer 60. The support region 126 is then folded to cover the tablet computer 60. In this position, the support region 126 is supported by the flange regions 170..176. The tab 178 enters the notch 180 to allow the support region 128 to lie flat. All of the surfaces of the main panel 110 that come into contact with the tablet computer are covered with foam to prevent it from being scratched by the metal of the main panel 10.

Each of the flanges 170, 172, 174, 176 are sized to allow access to sockets, switches, and so forth on edge surfaces of the tablet computer. This allows the tablet computer 60 to be used when it is in place in the case.

A magnet and ferromagnetic patch may be provided on the prop region 140 and a corresponding part of the rest 112 to retain the prop region 140 flush with the support region 128.

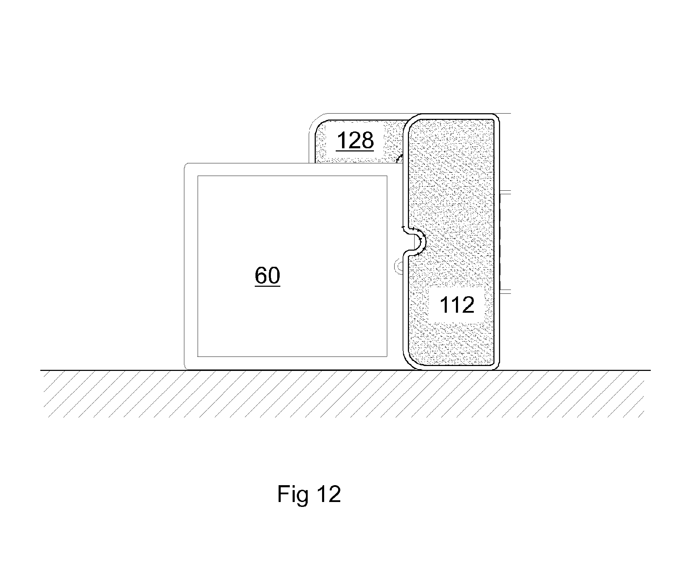

Embodiments of the invention can be used in other ways. One example is shown in Figure 12 in which a tablet computer 60 is supported upright on a support surface, with the support region 128 being partly folded out from the base region 126. Either of the above embodiments can be used in this way.

The support region 128 can be folded completely around to lie on top of the base region 126 to allow the tablet computer 60 to be used with the stand supported on a user's lap.

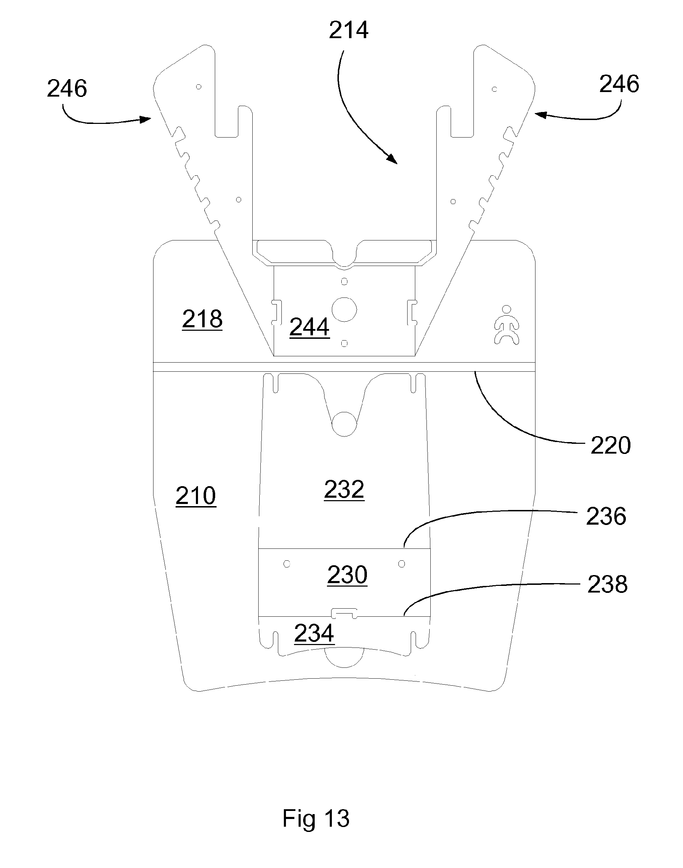

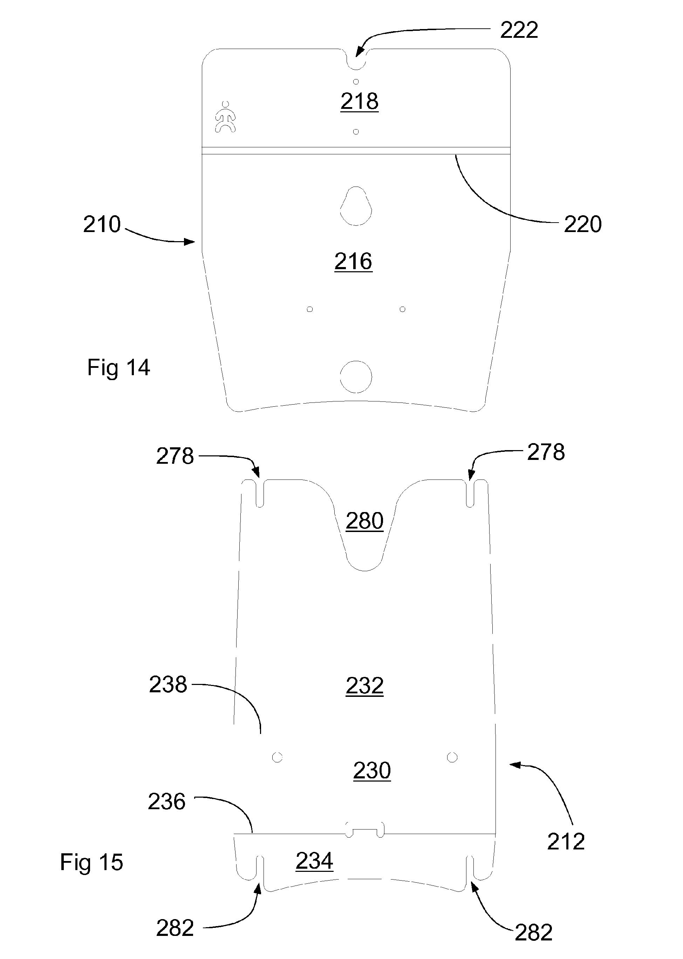

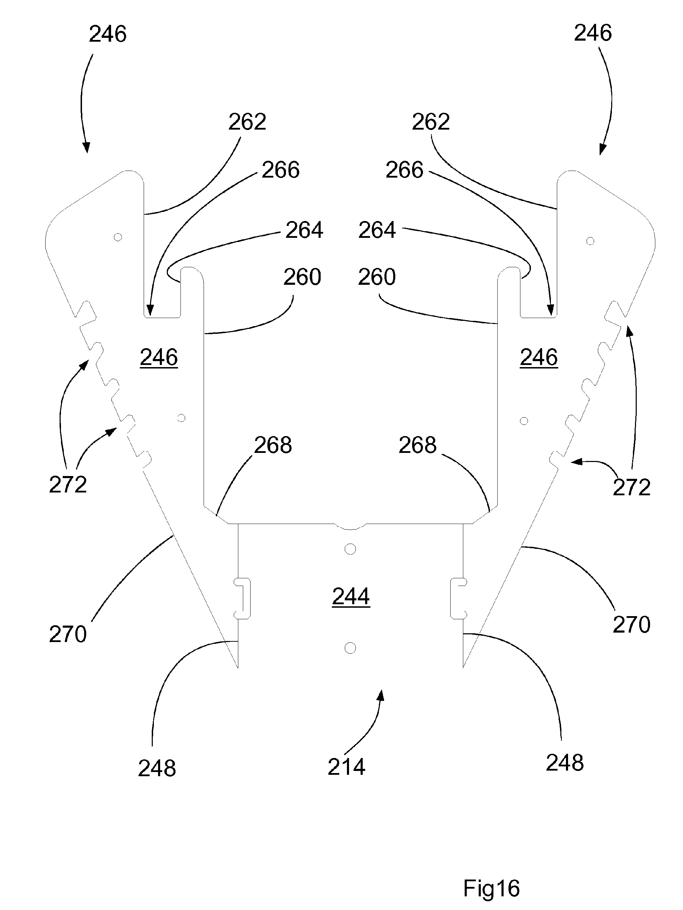

A further embodiment of the invention is shown in Figures 13 to 25. This embodiment comprises three components: a base 210, a brace 212 and a support 214, each formed from sheets of laminar material.

The base 210 comprises a base region 216 and a wrist support region 218. The base region 216 and the support region 218 are interconnected along a fold line 220 such that they can fold with respect to one another about a transverse axis.

The brace 212 comprises a fixing region 230. A forward support region 232 and a rear support region 234 are each connected respective parallel fold lines 236, 238 to the fixing region 230. The fixing region 230 is secured to the base region 216 of the base 210 with its fold lines 236, 238 parallel to the fold line 220 of the base 210.

The support 214 has a central fixing region 244 connected to two support regions 246 by respective fold lines 248. The support 214 is symmetrical about a central axis that is parallel to the fold lines 248. The fixing region 244 is secured to the wrist support region 218 of the base 210 such that the fold lines 248 are at right angles to the fold line 220 of the base 210. Centrally of an edge opposite the fold line 248, a notch 222 is formed in the wrist support region 218.

Each support region 246 has a main support surface 260 that is constituted by an edge of the material from which the support 214 is formed. A stop surface 268 extends between the main support surface 260 and the fixing region 244. Immediately adjacent to the fixing region 244, the stop surface 268 has a length that extends at right angles to the fold line 248. Remote from the fixing region 244, the stop surface 268 has a length that extends at an angle between the fold line 248 and the support surface 260. The main support surface 260 extends generally parallel to the fold lines 248 in this embodiment, although it could extend at another angle if required to support a computer at a desired orientation. In addition, each support region 246 has an auxiliary support surface 262, also constituted by an edge of the material from which the support 214 is formed, that is parallel to the main support surface 260. Again, the auxiliary support surface 262 is not necessarily parallel to the main support surface 260. A retaining surface 264 faces the auxiliary support surface 262, spaced from it and parallel to it. An auxiliary stop surface 266 connects the auxiliary support surface 262 and the retaining surface 264.

Each support region 246 has a support edge 270 that extends from the fold line 248 at an angle, in this embodiment, of approximately 26° to the fold line 248. This angle together with the shape and configureatio of the brace 212 determines the slope at which a tablet computer will be supported, and may be altered as required for convenience, comfort, or to meet regulatory requirements. A plurality of notches 272 extend into the support edge 270. The notches 272 furthest from the fold line 248 are larger than the others.

The forward support region 232 of the base 212 has a pair of slots 278 formed into an edge that is opposite the fold line 238 and a central notch 280. The slots 278 extend towards the fold line 238. The rear support region 234 has a pair of slots 282 formed into an edge that is opposite the fold line 236, the slots 282 extending towards the fold line 236.

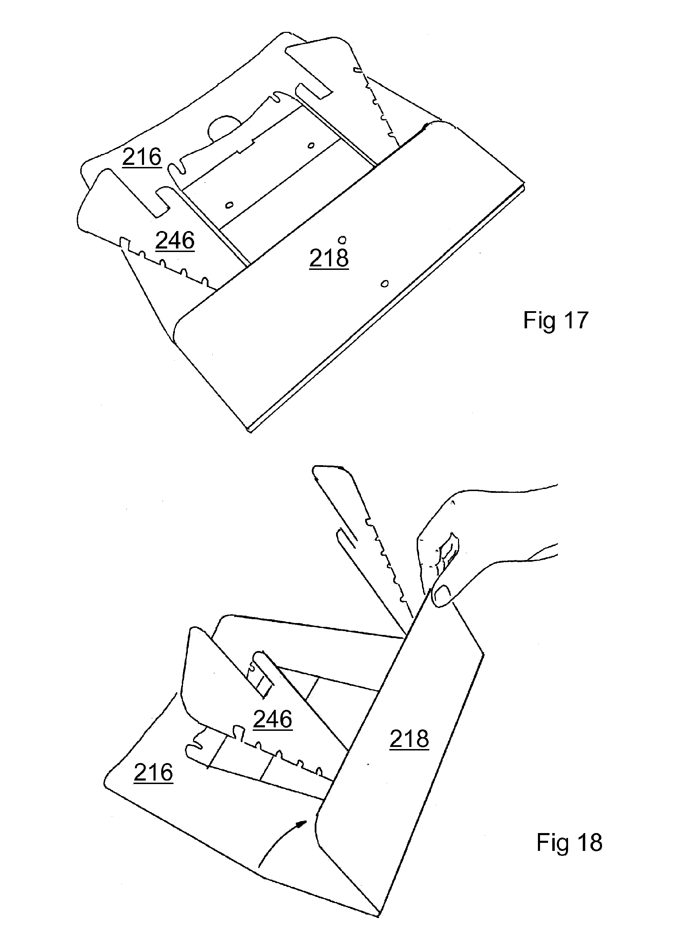

In a compact, storage condition, shown in Figure 17, the support regions 246 are folded to lie flat upon the base region 216 and the wrist support region 218 is folded to lie upon the support regions 246.

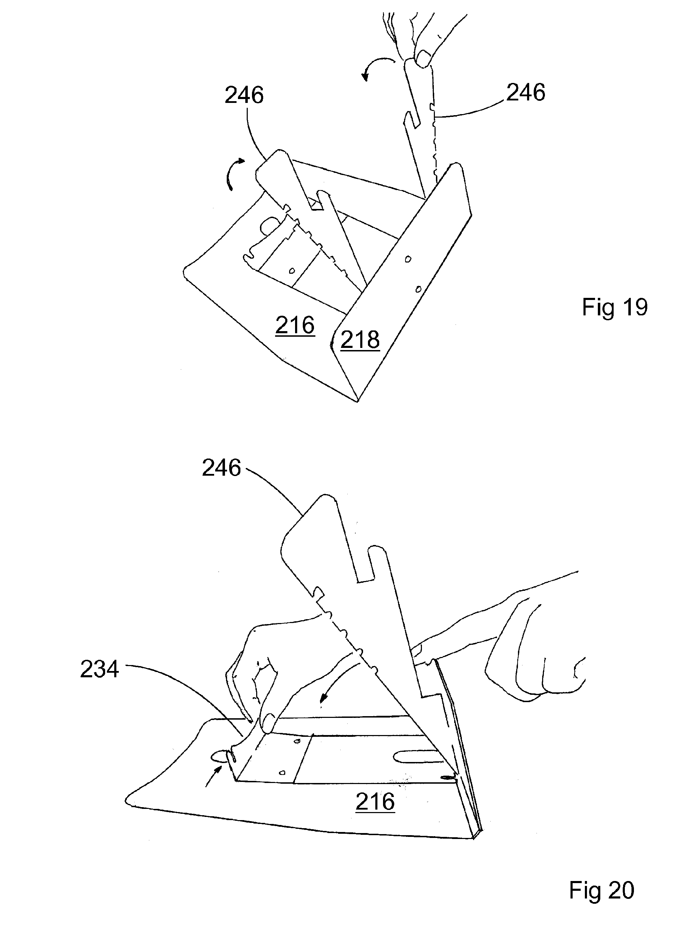

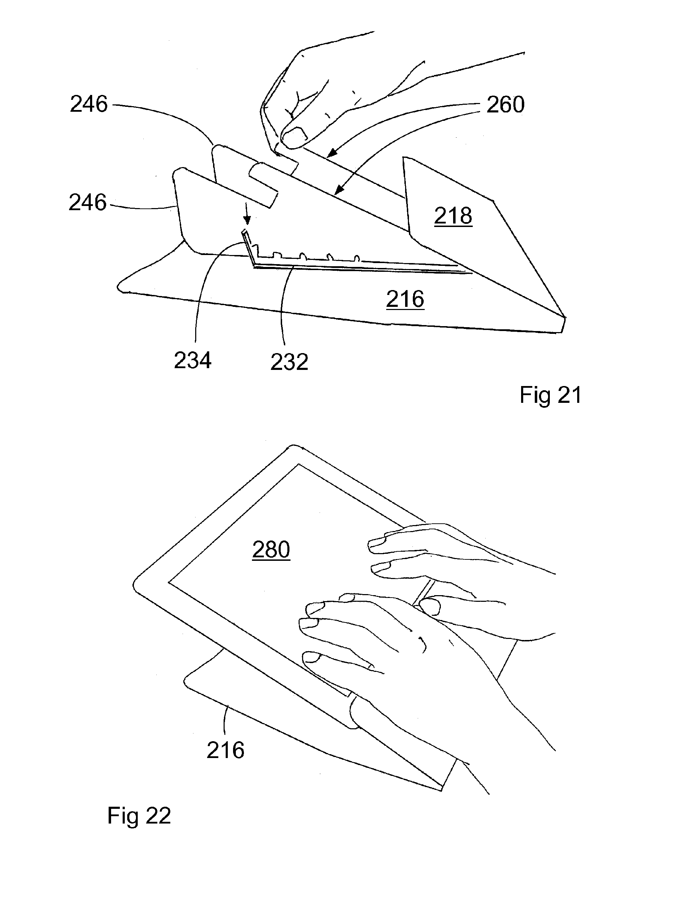

To prepare the stand for use, the base region 216 is placed on a surface and the wrist support region 218 is first lifted up, by pivoting about the fold line 220 (Figure 18). The support regions 246 are pivoted generally downwardly about their respective fold lines 248 until they are perpendicular to the surface (Figure 19). The rear support region 234 is then raised by pivoting about its fold line 238 (Figure 20) and the wrist support region 218 is lowered. The slots 282 in the rear support region 234 enter the largest of the notches 272 on the support edge 270 of the support region 246 thereby retaining the support regions 246 upright, and thereby supporting the wrist support region 218 above the base region 216 (Figure 21).

With the stand prepared as described above, a tablet computer 280 can now be placed on the stand. The tablet 280 is placed with a rear surface placed on the main support surfaces 260 of the support regions 246. The tablet 280 can slide down the main support surfaces 260 until a lower edge of the tablet 280 makes contact with the stop surfaces 268. Depending upon the thickness of the tablet 280, it may make contact with the right-angled part of the stop surfaces 268 adjacent to the fixing region 244 (in the case of a thinner tablet 280) or the angled part, which acts as a taper that grips the edge of the tablet 280. In this position, a small part of the wrist support region 218 may cover the front surface of the tablet 280, typically such that it overlies a surrounding bezel or frame, while leaving the operative screen of the tablet 280 exposed. Thus, the operative part of the tablet 280 projects beyond the wrist support region 234 in a plane that is generally parallel to it. The notch 222 in the wrist support region 218 allows access to a central operating button of the tablet 280.

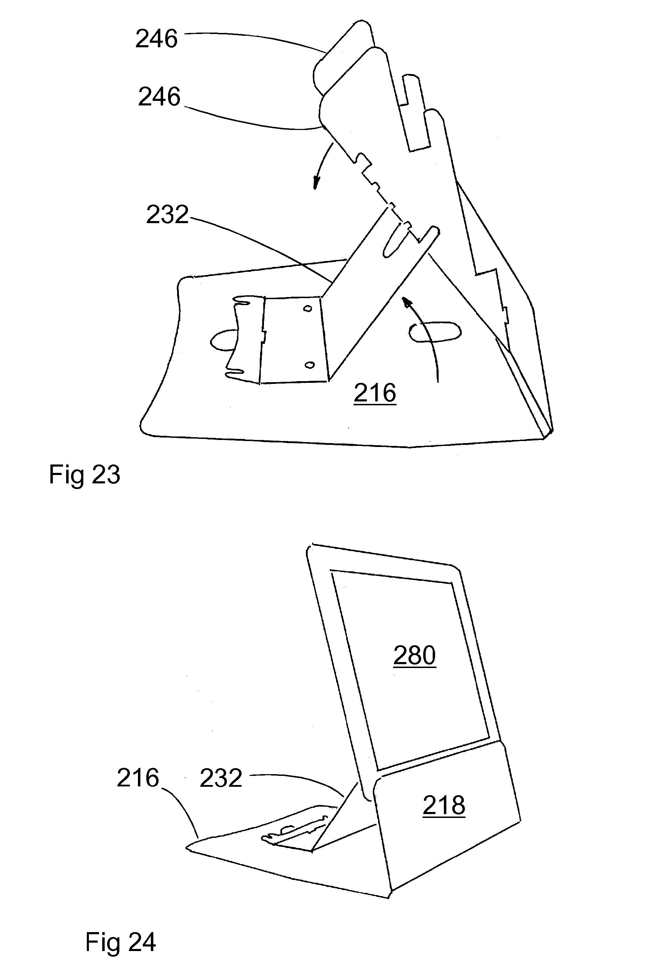

Figure 23 shows an alternative configuration of the stand in use. This configuration is intended to present the tablet computer 280 in a position in which its screen can be easily viewed, for example to make a presentation to a number of people, or where the tablet computer 280 is to be used in connection with an external physical keyboard. In this configuration, the support regions 246 are more steeply raised up and are supported on the forward support region 232, with the slots 278 of the forward support region 232 engaging with the notches 272 on the support edge 270 of the support region 246. The particular notches 272 on the support edge 270 of the support region 246 with which the forward support region 232 engages determines the angle of the support surfaces 260 and the wrist support region 218.

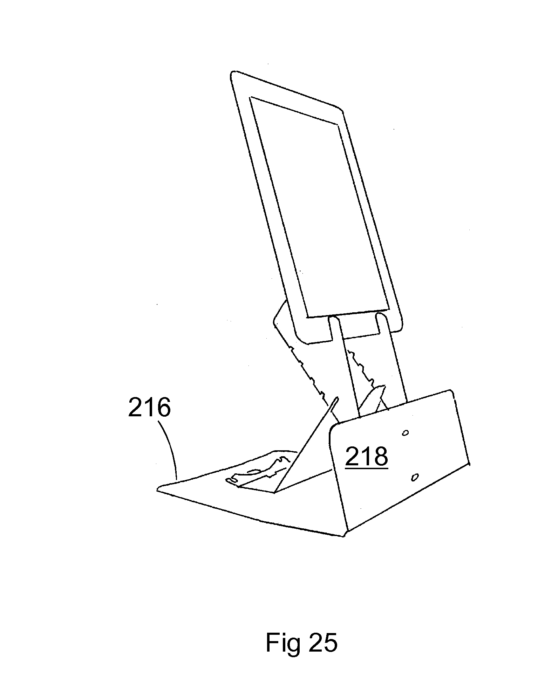

In this configuration, the tablet computer 280 can be supported on the main support surfaces 260 of the support regions 246 and the stop surfaces 268, as in the condition discussed above, as shown in Figure 24. Alternatively, the tablet 280 can be supported on the stop surface 266 between the auxiliary support surface 262 and the retaining surface 264, as shown in Figure 25.

In both configurations, the tablet 280 can be placed on the stand in either a portrait or a landscape orientation.

As with the first embodiment, any surface that it intended to make contact with a tablet computer may be covered by a material that serves to protect the tablet against scratching and which may enhance the grip upon the tablet.

In general, the wrist rest of embodiments of the invention will be disposed generally parallel to a support formation for a tablet computer. Spacing between the support formation and the wrist rest is selected to be sufficient to be close to a tablet computer placed between them. The spacing may be variable, such that when a user placed his or her wrists on the wrist rest, the spacing to the support formation is reduced, thereby enhancing the grip on the tablet. Alternatively or additionally the spacing to the support formation may be tapered to enhance the grip on the tablet. In general, only a small portion of the wrist rest overlies the tablet and the remainder of it extends from an edge of the tablet towards the base. A stop or a taper limits the distance that the tablet can extend into the space between the support member and the wrist rest.

## Claims

1. A stand for a tablet computer comprising:
a base (26, 210) that can be supported upon a support surface;
a support formation (28, 218) that can be folded between a compact position in which it closely overlies the base, and at least one raised position in which at least a part of the support is retained in a sloping disposition above the base;
**characterised by** a rest (12, 218) that can be placed in an operative position spaced from the support; whereby an edge portion of a tablet computer (60, 280) can be placed between an edge portion of the rest and the support for use; and
at least one stop arrangement (50, 268) is provided to limit the distance that the edge portion of the tablet computer can pass between the base and the rest, whereby a part of the rest extends beyond the stop towards the base forms a support for the wrists of a user of a tablet that is supported by the stand.

2. A stand for a tablet computer according to claim 1 that may be configured such that tablet computer makes direct contact with the rest when it is in use.

3. A stand for a tablet computer according to claim 1 that may be configured such that tablet computer is spaced from the rest when it is in use.

4. A stand for a tablet computer according to any preceding claim in which the support formation is connected to the base.

5. A stand for a tablet computer according to any preceding claim in which the support formation is connected to the rest.

6. A stand for a tablet computer according to any preceding claim in which the rest is connected to the support by an intermediate component that allows it to be displaced to the operative position for use.

7. A stand for a tablet computer according to any preceding claim in which the rest is capable of being deflected to the operative position.

8. A stand for a tablet computer according to any preceding claim in which the or each stop arrangement is positioned such that when a tablet computer is against the stop arrangement or stop arrangements, its display is not obscured by the rest.

9. A stand for a tablet computer according to any preceding claim in which the or each stop arrangement is formed by a portion of a surface of a component of the stand or by a portion of an edge of a component of the stand.

10. A stand for a tablet computer according to any preceding claim in which the rest is substantially parallel to the support formation.

11. A stand for a tablet computer according to any preceding claim in which the rest is closer to the support in the region remote from the edge portion than it is at the edge portion, whereby the space between the rest and the support may is tapered, that taper limiting the distance that a tablet computer can be inserted between the rest and the support region and thereby constituting a stop arrangement.

12. A stand for a tablet computer according to any preceding claim in which the support formation is constituted by one of a flat surface of a component of the stand or an edge of a component of the stand.

13. A stand for a tablet computer according to any preceding claim in which the base includes one or more upstanding projections, disposed such that a tablet computer can be placed upon the base, surrounded by the projections, the support being pivotally connected to one of the projections, such that when it is folded to overlie the base, it is spaced from the base by a distance sufficient to contain a tablet computer.

14. A stand for a tablet computer according to any preceding claim in which the support can be retained in one of a plurality of sloping dispositions above the base.

15. A stand for a tablet computer according to any preceding claim that includes a plurality of spaced stop arrangements.
